(19) Europäisches Patentamt

European Patent Office

Office européen des brevets

(11) **EP 1 731 755 A2**

(12) **EUROPÄISCHE PATENTANMELDUNG**

(43) Veröffentlichungstag:
**13.12.2006 Patentblatt 2006/50**

(51) Int Cl.:
*F02P 5/15* (2006.01)     *F02D 41/00* (2006.01)
*F02D 37/02* (2006.01)

(21) Anmeldenummer: **06005808.8**

(22) Anmeldetag: **22.03.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **07.06.2005   DE 102005026066**

(71) Anmelder: **Dr. Ing. h.c. F. Porsche Aktiengesellschaft**
**70435 Stuttgart (DE)**

(72) Erfinder:
• **Baur, Peter**
  **71297 Moensheim (DE)**
• **Martiny, Moritz**
  **76131 Karlsruhe (DE)**
• **Gruenter, Thomas**
  **71711 Steinheim-Höpfigheim (DE)**
• **Bader, Andreas**
  **73765 Neuhausen a.d.F. (DE)**

(54) **Verfahren und Vorrichtung zur Steuerung eines Verbrennungsmotors vor einem Anfahrvorgang**

(57)    Vorgestellt wird ein Verfahren zur Begrenzung eines von einem Verbrennungsmotor (12) eines Kraftfahrzeuges bereitgestellten Drehmoments (T) in einem ersten Betriebszustand, der sich durch eine Betätigung einer Bremse (20) des Kraftfahrzeugs bei gleichzeitig über einen Fahrerwunschgeber (52) erfolgenden Anforderung eines Drehmoments (T) des Verbrennungsmotors (12) von einem zweiten Betriebszustand unterscheidet, in dem die Bremse (20) nicht betätigt wird. Das Verfahren zeichnet sich dadurch aus, dass die Begrenzung wenigstens teilweise über eine gesteuerte Verringerung eines Zündwinkelwirkungsgrades im ersten Betriebszustand im Vergleich zum zweiten Betriebszustand erfolgt. Ferner wird ein Steuergerät (60) vorgestellt, das ein solches Verfahren ausführt.

Fig.1

EP 1 731 755 A2

**Beschreibung**

Die Erfindung betrifft ein Verfahren zur Begrenzung eines von einem Verbrennungsmotor eines Kraftfahrzeuges bereitgestellten Drehmoments in einem ersten Betriebszustand, der sich durch eine Betätigung einer Bremse des Kraftfahrzeugs bei gleichzeitig über einen Fahrerwunschgeber erfolgenden Anforderung eines Drehmoments des Verbrennungsmotors von einem zweiten Betriebszustand unterscheidet, in dem die Bremse nicht betätigt wird.

Ferner betrifft die Erfindung ein Steuergerät eines Verbrennungsmotors eines Kraftfahrzeuges, das ein von dem Verbrennungsmotor bereitgestelltes Drehmoment in einem solchen Betriebszustand begrenzt.

Darüber hinaus betrifft die Erfindung ein Computerprogramm und ein Speichermedium des Steuergeräts.

Zur Erzielung einer maximalen Beschleunigung beim Anfahren eines Kraftfahrzeugs aus dem Stillstand kann dessen Antriebsstrang durch gleichzeitig erfolgendes Anfordern eines hohen Drehmoments über den Fahrerwunschgeber und Festhalten des Kraftfahrzeugs durch Betätigen der Bremse verspannt werden. Bei einem Anfahren muss daher nicht erst Drehmoment aufgebaut werden, sondern bereits aufgebautes Drehmoment wird zunächst durch den Bremseingriff kompensiert und kann beim Lösen der Bremse das Kraftfahrzeug verzögerungslos beschleunigen.

Es versteht sich, dass eine solche Verspannung, die auch als Festbremsen bezeichnet wird, prinzipiell verschleißfördernd wirkt. So muss das unter Umständen bei hoher Drehzahl unter Volllast des Verbrennungsmotors aufgebrachte Drehmoment beim Festbremsen durch Reibungsarbeit zwischen Reifen und Fahrbahn oder im Triebstrang selbst vernichtet werden. Die dabei freiwerdende Reibungswärme ergibt sich aus dem Produkt der vom Verbrennungsmotor erzeugten Leistung, die im dreistelligen KW-Bereich liegen kann, mit der Zeit. Bei festgebremsten Antriebsrädern kommen nur kraftschlüssige Verbindungen des Triebstrangs, also insbesondere eine Nass- oder Trockenkupplung oder ein hydraulischer Drehmomentwandler, zur Umwandlung der Motorleistung in Reibungswärme in Frage.

Aus diesen Betrachtungen ergibt sich die Notwendigkeit, diese Bauteile beim Festbremsen durch eine Begrenzung der Leistung des Verbrennungsmotors vor unzulässig hohen mechanischen und thermischen Belastungen zu schützen, was durch eine Begrenzung seiner Drehzahl und/oder seines Drehmoments erfolgen kann.

Es ist in diesem Zusammenhang üblich, das Drehmoment durch eine Begrenzung der Füllung von Brennräumen des Verbrennungsmotors mit Luft oder Kraftstoff/Luft-Gemisch zu begrenzen. Bei Kraftfahrzeugen mit elektronisch betätigter Drosselklappe (E-Gas) erfolgt dies üblicherweise durch Zurücknahme des Drosselklappenöffnungswinkels. Dadurch erhöht sich jedoch auch die Reaktionszeit des Kraftfahrzeugs, beziehungsweise des Triebstrangs, nach einem Lösen der Bremse und einem damit einher gehenden Öffnen der Drosselklappe. Dies liegt unter anderem an der Trägheit der in die Brennräume einströmenden Luftmasse oder des einströmenden Gemisches. Die Beschleunigung der trägen Luftmasse verzögert den Momentenaufbau. Das volle Motormoment steht daher nach dem Lösen der Bremse nicht sofort zur Verfügung und das Fahrzeug beschleunigt nicht optimal.

Bei Turbomotoren wird die Füllung im festgebremsten Zustand alternativ oder ergänzend durch eine Reduzierung des Ladedrucks verringert. Dies hat den Nachteil, dass der Ladedruck nach dem Lösen der Bremse erst wieder ansteigen muss. Während der dafür benötigten Zeit steht nicht das volle Motormoment zur Verfügung.

Bekannt ist ferner, die maximale Festbremszeit, also die maximale Dauer der Festbremsung, zu beschränken, um die Kupplung nicht zu überlasten. Bei Überschreiten der maximalen Festbremszeit kann zum Beispiel das Signal des Fahrerwunschgebers ignoriert werden, so dass der Verbrennungsmotor im Extremfall im normalen Leerlauf weiter betrieben wird. Um größere Freiheitsgrade bei der Wahl des Anfahrzeitpunktes zu haben, ist es natürlich wünschenswert, eine möglichst große maximale Festbremszeit nutzen zu können.

Prinzipiell gilt insbesondere bei Sportwagen, dass man eine spontane und maximale Beschleunigung durch das Festbremsen erreichen möchte. Die beschriebenen Schutzmaßnahmen, also eine Momentenrücknahme, ein langsamer Momentenaufbau, lange Reaktionszeiten, niedrige Anfahrleistungen bei niedriger Anfahrdrehzahl und drastische Beschränkungen der Festbremszeit reduzieren die Akzeptanz und verschlechtern das subjektiv empfundene Fahrgefühl.

Vor diesem Hintergrund besteht die Aufgabe der Erfindung in der Angabe eines Verfahrens, und/oder eines Steuergeräts, und/oder eines Computerprogramms und/oder eines Speichermediums, mit dem sich die divergierenden Forderungen nach einem Bauteileschutz und einer Maximierung der Beschleunigung durch ein vorhergehendes Festbremsen jeweils besser vereinbaren lassen.

Diese Aufgabe wird bei einem Verfahren der eingangs genannten Art dadurch gelöst, dass die Begrenzung wenigstens teilweise über eine gesteuerte Verringerung eines Zündwinkelwirkungsgrades im ersten Betriebszustand im Vergleich zum zweiten Betriebszustand erfolgt.

Ferner wird die Aufgabe mit einem Steuergerät der eingangs genannten Art dadurch gelöst, dass das Steuergerät einen Zündwinkelwirkungsgrad im ersten Betriebszustand im Vergleich zum zweiten Betriebszustand verringert.

Mit Blick auf das eingangs genannte Computerprogramm und das Speichermedium erfolgt die Lösung dadurch, dass das Computerprogramm zur Anwendung des Verfahrens programmiert ist, beziehungsweise dadurch, dass auf dem Speichermedium ein solches Computerprogramm gespeichert ist.

Dabei wird unter dem Zündwinkelwirkungsgrad der Quotient aus dem bei einem bestimmten Zündwinkel auftretenden Drehmoment im Zähler und dem maximalen Drehmoment im Nenner verstanden, das sich bei optimalem Zündwinkel einstellt.

Mit diesen Merkmalen wird die Aufgabe jeweils vollkommen gelöst. Die Änderung des Zündwinkelwirkungsgrades kann von einer auf die andere Zündung erfolgen, was bei einem sechszylindrigen Viertakt-Verbrennungsmotor einem Kurbelwellenwinkel von 120° entspricht. Innerhalb von einem Arbeitsspiel, also innerhalb eines Drehwinkelbereichs von 720°, können sämtliche Zylinder von dem reduzierten Zündwinkelwirkungsgrad auf einen optimalen Zündwinkelwirkungsgrad umgeschaltet werden, so dass sich das volle Drehmoment bei als Beispiel angenommenen 3600 Umdrehungen pro Minute innerhalb von einem Dreißigstel (1/30) einer Sekunde aufbaut, was in der subjektiven menschlichen Wahrnehmung als schlagartiger Aufbau empfunden wird.

Bei Füllungseingriffen dauert der Drehmomentaufbau schon deshalb länger, weil die mit reduzierter Füllung betriebenen Brennräume in einem ersten Arbeitsspiel neu gefüllt werden müssen, bevor die Füllungen in einem zweiten Arbeitsspiel gezündet werden können. Darüber hinaus muss die träge Luftmasse zunächst aus dem Saugrohr heraus in Richtung der Brennräume beschleunigt werden, was zu zusätzlichen Verzögerungen führt.

Bei Turbomotoren verlängert sich die für den Drehmomentaufbau nötige Zeit noch wesentlich stärker, da Abgase einer gesteigerten Füllung erst den Turbolader erreichen und dessen Turbinendrehzahl steigern müssen um einen erhöhten Ladedruck und damit eine weitere Erhöhung der Füllung zu erzielen.

Die Erfindung entfaltet ihre Vorteile daher insbesondere bei Motoren mit Abgasturbolader dann maximal, wenn das Drehmoment nur über Zündungseingriffe reduziert wird. Beim Lösen der Bremse steht dann der volle Ladedruck an, weil der Luftdurchsatz durch den Verbrennungsmotor beim Festbremsen im Idealfall nicht eingeschränkt wird und der Ladedruck daher nicht reduziert ist.

Mit Blick auf Ausgestaltungen des Verfahrens ist bevorzugt, dass die Verschlechterung des Zündwinkelwirkungsgrades über eine Verkleinerung des Winkelabstands zwischen den Zündungen und einem oberen Totpunkt einer Kolbenbewegung des Verbrennungsmotors erfolgt.

Trägt man den Zündwinkelwirkungsgrad über dem Zündwinkel auf, so ergibt sich bei dem optimalen Zündwinkel ein Maximum. Daher kann eine Verringerung des Drehmomentes prinzipiell durch eine früher, das heißt mit größerem Abstand zum oberen Totpunkt erfolgende Zündung (Frühverstellung) oder durch eine entsprechend näher am oberen Totpunkt erfolgende Zündung (Spätverstellung) erreicht werden. Bei der Frühverstellung kann es jedoch durch sogenannte klopfende Verbrennungen zu Schäden an Zündkerzen oder am Verbrennungsmotor kommen. Die Spätverstellung hat den weiteren Vorteil, dass die Abgastemperatur steigt, was bei Turbomotoren den thermodynamischen Wirkungsgrad der Turbine erhöht.

Bevorzugt ist auch, dass die Begrenzung ergänzend über eine Begrenzung von Füllungen von Brennräumen des Verbrennungsmotors erfolgt.

Durch diese Kombination lässt sich insbesondere bei Verbrennungsmotoren mit Abgasturbolader beim Lösen der Bremse ein hoher Ladedruck und damit eine hohe Anfahrleistung realisieren, weil der Luftdurchsatz beim Festbremsen nur so gering wie nötig reduziert ist. Außerdem kann eine solche Maßnahme zur gegebenenfalls erforderlichen Begrenzung der Abgastemperatur zum Schutz von Komponenten des Abgassystems und zur Begrenzung der Schadstoffemissionen beim Festbremsen dienen.

Eine weitere bevorzugte Ausgestaltung sieht vor, dass ein aus der Verringerung des Zündwinkelwirkungsgrades resultierender Drehmomentverlust im ersten Betriebszustand allmählich verringert wird, während ein aus der Begrenzung der Füllungen resultierender Drehmomentverlust im ersten Betriebszustand allmählich vergrößert wird.

Durch diese Maßnahme kann ein stetiger Übergang von einer zu lang ausgedehnten Festbremsung in einen Betriebszustand herbeigeführt werden, in dem der Bauteileschutz wieder eine höhere Priorität erhalten muss als eine maximale Anfahrbeschleunigung. Bei der Begrenzung der Füllung sinkt z. B. die Abgastemperatur.

Alternativ ist bevorzugt, dass ein aus der Begrenzung der Füllungen resultierender Drehmomentverlust im ersten Betriebszustand allmählich verringert wird, während ein aus der Verringerung des Zündwinkelwirkungsgrades resultierender Drehmomentverlust im ersten Betriebszustand allmählich vergrößert wird.

Dadurch wird eine Zündwinkeldrehmomentreserve allmählich zu Lasten einer Füllungsdrehmomentreserve aufgebaut, wobei auch eine durch die Spätverstellung der Zündung ausgelöste Steigerung der Abgastemperatur verzögert wird. Die auf eine bestimmte Festbremszeit normierte thermische Belastung der im heißen Abgas liegenden Komponenten wird dadurch verringert, was eine Vergrößerung der maximal zulässigen Festbremszeit erlaubt.

In diesem Fall ist bevorzugt, dass nach Ablauf einer vorgebbaren Maximalzeitdauer auf die andere Alternative umgesteuert wird, um dem Bauteileschutz gegebenenfalls wieder eine höhere Priorität zuzuordnen. Beide Alternativen können daher auch kombiniert werden, wobei die Zündwinkeldrehmomentreserve erst steigt und dann gegebenenfalls wieder zurückgefahren wird.

Bevorzugt ist auch, dass die Begrenzung nur dann erfolgt, wenn eine Fahrgeschwindigkeit des Kraftfahrzeugs kleiner als ein Fahrgeschwindigkeitsschwellenwert ist.

Durch diese Maßnahme bleibt die Verringerung des Drehmomentes und der Leistung zum Beispiel auf den Fahrzeugstillstand oder niedrige Geschwindigkeiten beschränkt. Damit wird vermieden, dass die Fahrdynamik bei höheren Geschwindigkeiten beeinträchtigt wird, wenn zum Beispiel ein bestimmtes Eigenlenkverhalten des Fahrzeugs durch gleichzeitiges Bremsen und Gasgeben provoziert werden soll.

Ferner ist bevorzugt, dass in dem ersten Zustand zusätzlich eine Begrenzung einer Drehzahl des Verbrennungsmotors auf einen Maximalwert erfolgt.

Durch diese Maßnahme wird einerseits die im Stillstand in Wärme umzuwandelnde Leistung begrenzt und gleichzeitig ergibt sich beim Lösen der Bremsen noch eine Drehzahlreserve, so dass die optimale Anfangsbeschleunigung nicht frühzeitig wegen eines erforderlichen Übersetzungswechsels im Wechselgetriebe unterbrochen werden muss.

Mit Blick auf Ausgestaltungen des Steuergeräts ist bevorzugt, dass es wenigstens eine der Ausgestaltungen des Verfahrens ausführt.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Zeichnungen

Ausführungsbeispiele der Erfindung sind in den Zeichnungen dargestellt und werden in der nachfolgenden Beschreibung näher erläutert. Es zeigen, jeweils in schematischer Form:

Fig. 1    ein technisches Umfeld der Erfindung;

Fig. 2    einen Verlauf verschiedener Betriebsparameter aus dem Umfeld der Fig. 1 bei einem Festbremsen und einer daran anschließenden Fahrzeugbeschleunigung;

Fig. 3    eine Abhängigkeit eines Motordrehmomentes von einem Zündwinkel;

Fig. 4    ein erstes Ausführungsbeispiel eines erfindungsgemäßen Verfahrens;

Fig. 5    den Aufbau einer Drehmomentreserve durch Füllungs- und Zündungseingriffe; und

Fig. 6    Verläufe verschiedener Signale aus dem Umfeld der Fig. 1, die Vorteile der Erfindung belegen.

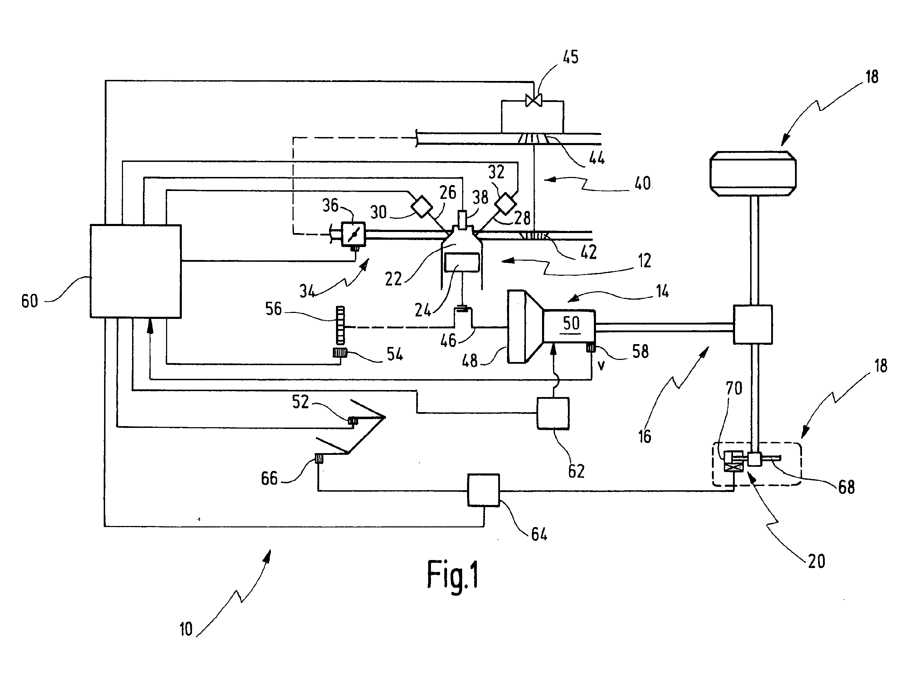

Im Einzelnen zeigt Fig. 1 die Gesamtheit eines Triebstrangs 10 eines Kraftfahrzeugs, das von einem Verbrennungsmotor 12 angetrieben wird. Das vom Verbrennungsmotor 12 erzeugte Drehmoment wird über einen Drehmomentwandler 14 und eine Kraftübertragungs- und Umlenkmechanik 16 auf Antriebsräder 18 des Kraftfahrzeugs übertragen. In die Antriebsräder 18 ist eine Fahrzeugbremse 20 integriert.

Das Drehmoment des Verbrennungsmotors 12 wird in Brennräumen 22 erzeugt, die von Kolben 24 beweglich abgedichtet werden. Ein Wechsel von Füllungen der Brennräume 22 wird über Einlassventile 26 und Auslassventile 28 gesteuert, wobei das Einlassventil 26 von einem Einlassventilsteller 30 und das Auslassventil 28 von einem Auslassventilsteller 32 betätigt wird. Die Steller 30, 32 können als mit fester Phasenbeziehung laufende Nockenwellen, Nockenwellen mit variabler Phasenbeziehung, oder als mechanische, hydraulische oder elektromagnetische Stellglieder realisiert sein, die einen variablen Hub der Einlassventile 26 und Auslassventile 28 erlauben.

Bei geöffnetem Einlassventil 26 strömt Luft oder ein Gemisch aus Luft und Brennstoff aus einem Ansaugsystem 34 in die Brennräume 22. Die Menge der einströmenden Luft oder des einströmenden Gemisches wird über einen Drosselklappensteller 36 und/oder, bei entsprechender Ausgestaltung des Einlassventilstellers 30, über einen variablen Hub des Einlassventils 26 eingestellt. Die Brennstoffdosierung erfolgt entweder im Ansaugsystem 34 (Saugrohreinspritzung) oder durch direkte Einspritzung von Brennstoff in die Brennräume 22 (Direkteinspritzung). Auf jeden Fall wird in den Brennräumen 22 ein brennfähiges Brennstoff/Luft-Gemisch erzeugt, das von einer Zündkerze 38 gezündet wird und den Kolben 24 antreibt. Restgase der verbrannten Füllung der Brennräume 22 werden über das geöffnete Einlassventil 28 ausgestoßen.

Der in der Figur 1 dargestellte Verbrennungsmotor 12 weist einen Abgasturbolader 40 auf, dessen Turbinenrad 42 von den ausgestoßenen Abgasen angetrieben wird und seinerseits ein Verdichterrad 44 im Ansaugsystem 34 antreibt. Über ein Ladedruckregelventil 45 wird der damit vor der Drosselklappe 36 und/oder dem Einlassventil 26 erzeugte Ladedruck und damit die Füllung der Brennräume 22 beeinflusst. Auch wenn die Erfindung im technischen Umfeld der Fig. 1, also eines Verbrennungsmotors 12 mit Abgasturbolader 40 beschrieben wird, versteht es sich, dass die Erfindung auch bei Verbrennungsmotoren ohne einen solchen Abgasturbolader 40 verwendbar ist. Der vom Verbrennungsdruck angetriebene Kolben 24 treibt seinerseits eine Kurbelwelle 46 des Verbrennungsmotors 12 an, die kraftschlüssig mit dem Drehmomentwandler 14 verbunden ist.

Der Drehmomentwandler 14 weist eine Kupplung 48 als kraftschlüssiges Element sowie ein Wechselgetriebe 50 auf. Die Kupplung 48 kann als trennbare Trocken- oder Nass-Reibungskupplung oder als hydraulischer Drehmomentwandler oder Strömungskupplung realisiert sein. Wesentlich ist, dass die Kupplung 48 bei durch einen Bremseingriff auf die Fahrzeugbremse 20 blockierter Getriebeeingangswelle eine von der Kurbelwelle 46 eingespeiste Drehleistung möglichst verschleißarm in Reibungswärme umwandeln kann.

Das vom Verbrennungsmotor 12 erzeugte Drehmoment wird wesentlich durch einen Fahrerwunschgeber 52 vorgegeben, der mit einem Fahrpedal des Kraftfahrzeugs verbunden ist. Ein Drehwinkelsensor 54 tastet Winkelmarkierungen eines drehfest mit der Kurbelwelle 46 verbundenen Geberrades 56 ab und liefert damit eine Information über die Winkellage und Winkelgeschwindigkeit der Kurbelwelle 46. Optional ist ferner ein Fahrgeschwindigkeitsgeber 58 verbunden, der z. B. eine Drehzahl am Ausgang des Wechselgetriebes 50 erfasst.

Es versteht sich, dass zur Steuerung und/oder Regelung eines Triebstrangs 10 bei modernen Kraftfahrzeugen eine Vielzahl weiterer Sensoren vorhanden sein kann, die Drücke, Temperaturen, Winkellagen von Nokkenwellen und weitere Betriebsparameter des Verbrennungsmotors 12 und/oder des Triebstrangs 10 erfassen. Die Erfindung ist daher nicht auf einen Triebstrang 10 beschränkt, der nur die bisher angegebenen Sensoren 52, 56 und 58 aufweist.

Zur Steuerung des Verbrennungsmotors 10 werden die Signale des Fahrerwunschgebers 52, des Drehzahlsensors 54 und ggf. des Fahrgeschwindigkeitsgebers 58 von einem Motorsteuergerät 60 verarbeitet, das daraus Stellsignale zur Steuerung von Funktionen des Verbrennungsmotors 12 bildet. Wesentlich sind in diesem Zusammenhang Stellsignale, die das vom Verbrennungsmotor 12 erzeugte Drehmoment beeinflussen. Das sind hier im Wesentlichen Signale, die eine Füllung der Brennräume 22 in einem sogenannten Luftpfad beeinflussen, sowie Zündsignale zur Auslösung einer Zündung der Brennraumfüllung über eine Ansteuerung der Zündkerze 38 bei einer vorbestimmten Winkellage der Kurbelwelle 46.

Bei dem in der Fig. 1 dargestellten Triebstrang 10 kann die Füllung z. B. über eine Ansteuerung des Ladedruckventils 45, und/oder des Drosselklappenstellers 36 und/oder des Einlassventilstellers 30 beeinflusst werden.

Beim Gegenstand der Fig. 1 wird der Triebstrang 10 ergänzend durch ein Getriebesteuergerät 62 und ein Bremssteuergerät 64 beeinflusst, wobei die Steuergeräte 60, 62, 64 über ein Bussystem Signale austauschen können oder auch zu zweit oder zu dritt zu einer baulichen Steuergeräteeinheit zusammengefasst sein können. Das Bremssteuergerät 64, beispielsweise ein ABS-Steuergerät, verarbeitet Signale eines Bremssignalgebers 66, der z. B. mit einem Bremspedal des Kraftfahrzeugs verbunden sein kann. In Abhängigkeit von Signalen des Bremssignalgebers 66 kann insbesondere die Fahrzeugbremse 20 blockiert werden, indem Bremsscheiben 68 durch eine Betätigung von Bremszangen 70 blockiert werden. Das Signal des Bremssignalgebers 66 wird entweder direkt oder über das Bremssteuergerät 64 auch dem Motorsteuergerät 60 übergeben.

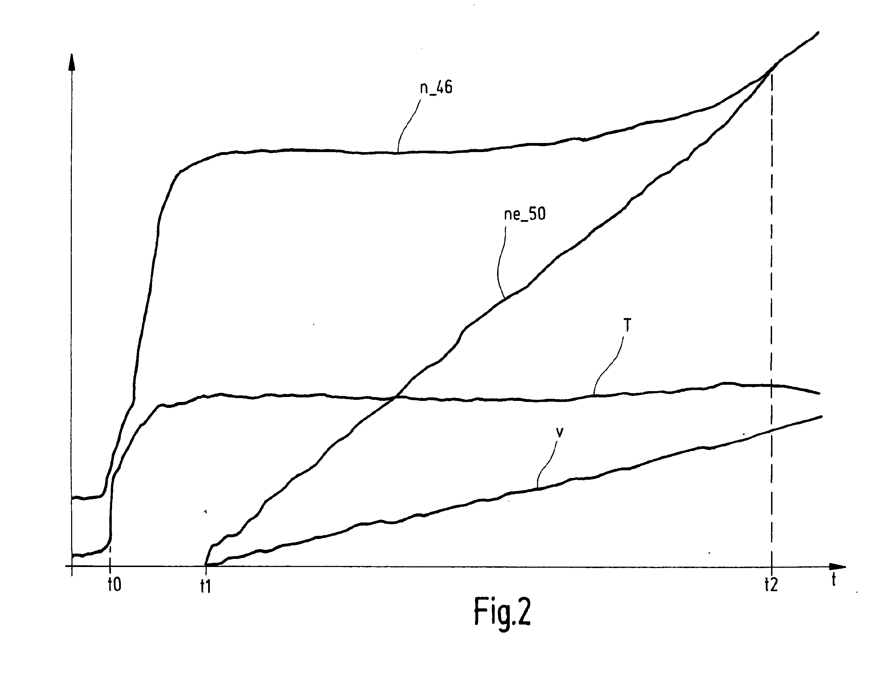

Fig. 2 zeigt einen Verlauf verschiedener Betriebsparameter des Triebstrangs 10 bei einem Festbremsen und einer daran anschließenden Fahrzeugbeschleunigung. Im Einzelnen sind in der Fig. 1 eine Kurbelwellendrehzahl n_46, eine Drehzahl ne_50 am Eingang des Wechselgetriebes 50, ein vom Verbrennungsmotor 12 erzeugtes Drehmoment T und eine Fahrzeuggeschwindigkeit v über der Zeit aufgetragen. Bis zum Zeitpunkt t0 befindet sich der Verbrennungsmotor 12 z. B. im Leerlauf mit stabilen, niedrigen Werten der Kurbelwellendrehzahl n_46 und des Drehmomentes T. Zum Zeitpunkt t0 wird über den Fahrerwunschgeber 52 ein hohes Drehmoment angefordert und gleichzeitig die Fahrzeugbremse 20 blockiert. Die Kurbelwellendrehzahl n_46 und das Drehmoment T steigen entsprechend der Drehmomentanforderung bis auf vorgegebene Maximalwerte an, so dass das Fahrzeug bei unter Umständen vollem Drehmoment und hoher Drehzahl durch die Fahrzeugbremse 20 im Stillstand gehalten wird.

Bei Automatikgetrieben mit hydraulischem Drehmomentwandler stellt sich beim Festbremsen die Motor-Festbremsdrehzahl ein. Diese Drehzahl ist durch die Auslegung des Wandlers festgelegt. Bei Getrieben mit automatisch betätigter Kupplung kann die Motor-Festbremsdrehzahl durch das Motorsteuergerät 60 vorgegeben werden. Je höher Drehmoment T und Drehzahl n_46 beim Festbremsen sind, desto höher ist die Verlustleistung in der Kupplung 48, die darin verrichtete Reibarbeit und damit die mechanische und thermische Belastung der Kupplung 48.

Zum Zeitpunkt t1 wird die Bremse gelöst. Unmittelbar nach dem Lösen der Fahrzeugbremse 20 fährt das Fahrzeug an, so dass sich die Fahrgeschwindigkeit v erhöht. Dabei wird das Drehmoment T durch die Kupplung 48 zunehmend auf das Wechselgetriebe 50 übertragen, so dass die Eingangsdrehzahl ne_50 des Wechselgetriebes 50 ansteigt.

Das Fahrzeug beschleunigt bei vollem Drehmoment T und voller Motordrehzahl n_46, wobei sich der Unterschied der Kurbelwellendrehzahl n_46 und der Eingangsdrehzahl ne_50 des Wechselgetriebes 50 allmählich verringert, bis zum Zeitpunkt t2 eine kraftschlüssig drehfeste Verbindung zwischen dem Wechselgetriebe 50 und der Kurbelwelle 46 des Verbrennungsmotors 12 hergestellt ist.

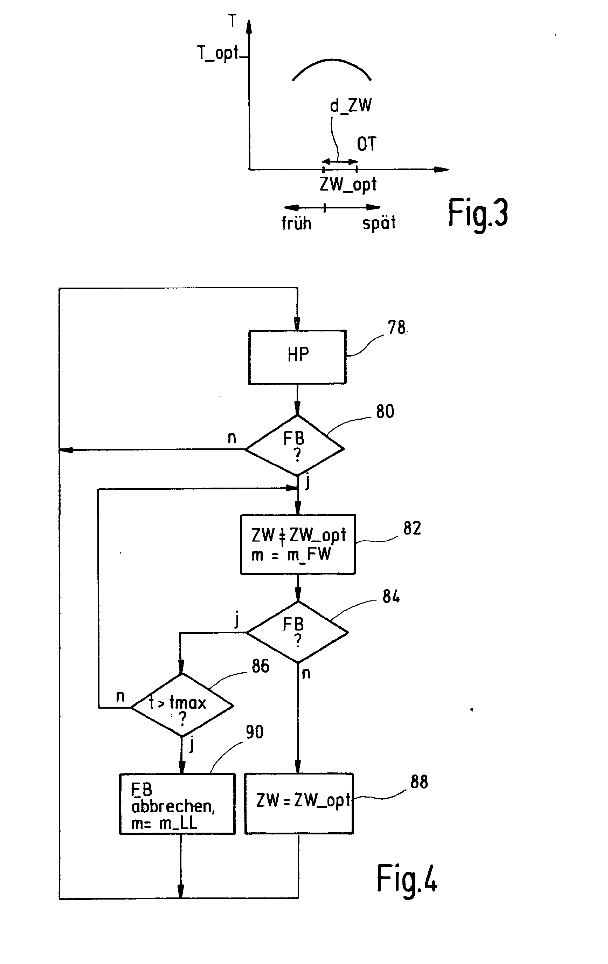

Figur 3 veranschaulicht qualitativ den Einfluss des Zündwinkels auf das vom Verbrennungsmotor 12 erzeugte Drehmoment T. Danach ist das Drehmoment T bei einem optimalen Zündwinkel ZW_opt maximal und sinkt bei einer Verstellung des Zündwinkels in Richtung spät oder in Richtung früh ab. Entsprechend ändert sich der weiter oben definierte Zündwinkelwirkungsgrad. Der optimale Zündwinkel ZW_opt liegt in der Regel bei einem Abstand d_ZW vor dem oberen Totpunkt OT am Ende eines Verdichtungstaktes des Kolbens 24.

Fig. 4 zeigt ein erstes Ausführungsbeispiel eines erfindungsgemäßen Verfahrens. Danach wird aus einem Hauptprogramm HP zur Steuerung des Verbrennungsmotors 12, das in der Fig. 4 durch einen Schritt 78 repräsentiert wird und in dem beispielsweise Leerlaufgrößen des Verbrennungsmotors 12 wie eine Füllung der Brennräume 22 mit einer Luftmasse m_LL und eine Leerlaufdrehzahl n_LL eingestellt werden, ein Schritt 80 erreicht. Im Schritt 80 wird überprüft, ob Festbremsbedingungen FB erfüllt sind. Die Abfrage im Schritt 80 wird insbesondere dann bejaht, wenn der Bremssignalgeber 66 eine betätigte Fahrzeugbremse 20 und gleichzeitig der Fahrerwunschgeber 52 eine hohe Drehmomentanforderung signalisiert. In diesem Fall, in dem der Triebstrang 10 entsprechend der Verläufe der Signale n_46 und T im Zeitraum zwischen den Zeiten t0 und t1 der Fig. 2 verspannt werden soll, verzweigt das Verfahren zu einem Schritt 82, in dem die Füllung der Brennräume 22 vergrößert wird, wobei das Drehmoment des Verbrennungsmotors 12 gleichzeitig durch Einstellen eines Zündwinkels ZW beschränkt wird, der vom optimalen Zündwinkel ZW_opt abweicht. Die Vergrößerung der Füllung wird im Schritt 82 dadurch repräsentiert, dass eine dem Fahrerwechsel nach hohem Drehmoment entsprechende Füllung m_W repräsentiert.

Durch diese Schritte, die noch durch ergänzende Schritte zur Begrenzung der Motordrehzahl n_46 ergänzt sein können, stellt sich der in der Fig. 2 zwischen den Zeiten t0 und t1 dargestellte Anstieg des Drehmomentes T und der Motordrehzahl n_46 ein. Im Schritt 84 wird anschließend überprüft, ob die Bedingungen für ein Festbremsen des Fahrzeugs weiter vorliegen. Wenn diese Abfrage bejaht wird, verzweigt das Verfahren zum Schritt 86, in dem überprüft wird, ob eine maximal zulässige Zeit tmax überschritten wurde. Diese maximal zulässige Zeit tmax wird z. B. zu Beginn einer Festbremsphase vom Motorsteuergerät 60 vorgegeben, um Schäden an der Kupplung 48 zu verhindern. Wenn die Abfrage im Schritt 86 verneint wird, wird erneut der Schritt 82 erreicht, in dem die Zündwinkelverstellung und die erhöhten Füllungen der Brennräume 22 weiter beibehalten bleiben.

Die Schleife aus den Schritten 82, 84 und 86 wird so lange durchlaufen, bis eine der in den Schritten 84 und 86 abgefragten Abbruchbedingungen erfüllt sind. Wird z. B. die maximal zulässige Zeit tmax überschritten, verzweigt das Verfahren aus dem Schritt 86 heraus in einen Schritt 90, in dem das Festbremsen abgebrochen wird. Dazu wird insbesondere die Vergrößerung der Füllung der Brennräume 22 zurückgenommen und in das Hauptprogramm 78 zurückverzweigt, in dem z. B. ein normaler Leerlaufzustand des Verbrennungsmotors 12 eingestellt wird. Dabei wird insbesondere die erhöhte Füllung m_FW auf einen Leerlaufwert m_LL reduziert.

Wird dagegen innerhalb der zulässigen Festbremszeitspanne die Fahrzeugbremse 20 gelöst, wird dies im Schritt 84 festgestellt, weil dann die Festbremsbedingungen FB nicht mehr erfüllt sind. In diesem Fall verzweigt das Verfahren aus dem Schritt 84 in den Schritt 88, in dem die Verringerung des Zündwinkelwirkungsgrades durch sprungartiges Verstellen des Zündwinkels auf den optimalen Zündwinkel ZW_opt aufgehoben wird. Dadurch wird schlagartig die als Folge der Verbindung aus verstellter Zündung und erhöhter Füllung der Brennräume 22 bereitgestellte Drehmomentreserve des Verbrennungsmotors mobilisiert, so dass das Fahrzeug zum Zeitpunkt t1 in der Fig. 2 durch maximal erlaubte Werte des Festbremsdrehmomentes T beschleunigt werden kann.

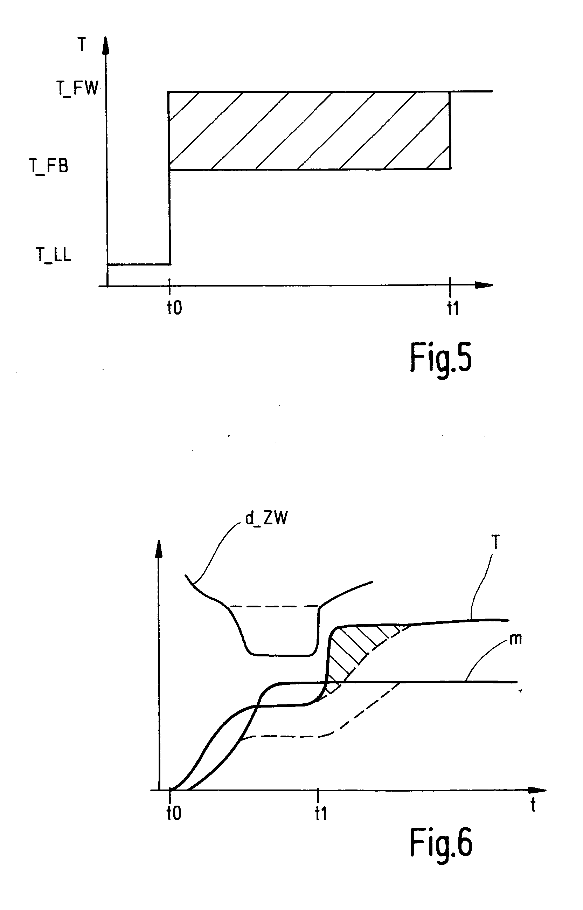

Fig. 5 veranschaulicht qualitativ den Verlauf des Drehmoments T des Verbrennungsmotors 12 zwischen den Zeitpunkten t0 und t1 aus der Fig. 2. Bis zum Zeitpunkt t0 befindet sich der Verbrennungsmotor 12 im Leerlauf, bei dem sich ein Leerlaufdrehmoment T_LL einstellt. Zum Zeitpunkt t0 wird durch den Fahrerwunschgeber 52 ein hohes Drehmoment T_FW angefordert. Da gleichzeitig die Fahrzeugbremse 20 den Antriebsstrang 10 blockiert, wird das Drehmoment T des Verbrennungsmotors 12 jedoch nicht bis zu dem gewünschten Wert T_FW gesteigert, sondern durch das in der Fig. 4 dargestellte Verfahren auf einen für das Festbremsen zulässigen Maximalwert T_FB beschränkt. Erst zum Zeitpunkt t1 wird die beschränkende Maßnahme aufgehoben, so dass das tatsächlich vom Verbrennungsmotor 12 erzeugte Drehmoment dem durch den Fahrerwunsch FW vorgegebenen Sollwert T_FW entspricht. Die schraffierte Fläche in der Fig. 5 repräsentiert daher gewissermaßen eine Drehmomentreserve, die zum Zeitpunkt t0 bereitgestellt wird und zum Zeitpunkt t1 mobilisiert wird.

Bei dem in der Fig. 4 dargestellten Verfahren erfolgt die Bereitstellung dieser Drehmomentreserve dadurch, das die Füllung der Brennräume 22 entsprechend dem Fahrerwunsch eingestellt wird und das dann zu erwartende Drehmoment T_FW durch einen Zündwinkeleingriff auf den maximal zulässigen Wert T_FB beschränkt wird. Beim Stand der Technik wurde der maximal zulässige Wert T_FB dagegen dadurch eingestellt, dass bereits die Füllung der Brennräume 22 auf einen Wert beschränkt wurde, der bei optimalem Zündwinkel zu dem Wert T_FB führte.

In Ausgestaltungen der Erfindung sind auch Mischformen zwischen den beiden beschränkenden Maßnahmen möglich. Dabei können insbesondere die Größen Zündwinkel ZW und Füllung m im Schritt 82 zeitabhängig eingestellt werden. Der Zündwinkel wird dabei entsprechend der folgenden Gleichung eingestellt:

$$ZW = ZW\_opt + d\_ZW(t).$$

Entsprechend wird die Füllung m wie folgt eingestellt:

$$m = m\_FW\text{-}dm(t).$$

Mit anderen Worten: Die Zündung wird in Richtung "spät" verstellt, die Füllung m wird reduziert. Dabei sind die Größen d_ZW(t) und dm(t) z. B. so einzustellen, dass das resultierende Drehmoment T_FB zwischen den Zeitpunkten t0 und t1 der Fig. 2 konstant bleibt. Dies ist z. B. dann der Fall, wenn eine Spätverstellung des Zündwinkels ZW um den Betrag d_ZW(t) zu einer Drehmomenteinbuße -T_ZW führt, eine Reduzierung der Füllung um den Wert dm(t) zu einer Verringerung des Drehmomentes um einen Wert -T_dm führt, so dass die folgende Gleichung erfüllt ist:

$$T\_FB = T\_FW - T\_dm - T\_ZW$$

Der zeitliche Verlauf der Drehmoment reduzierenden Eingriffe d_ZW(t) und -dm(t) kann dabei so erfolgen, dass zu Beginn der Festbremsphase eine große Luftpfadverstellung - dm(t) mit einer geringen Zündungsverstellung +d_ZW(t) kombiniert wird, wobei der Zündwinkeleingriff d_ZW(t) mit zunehmender Festbremszeit vergrößert und der Füllungseingriff -dm(t) mit zunehmender Festbremszeit verringert wird.

Alternativ kann zu Beginn der Festbremsphase eine große Zündungsverstellung d_ZW(t) gewählt werden, die mit zunehmender Festbremszeit verringert wird, während ein anfänglich geringer Füllungseingriff -dm(t) mit zunehmender Festbremszeit vergrößert wird.

Fig. 6 veranschaulicht die Vorteile der Erfindung durch eine Gegenüberstellung von zeitlichen Verläufen des Drehmomentes T des Verbrennungsmotors 12, der Füllung m seiner Brennräume 22 und des Abstandes d_ZW des Zündwinkels vom oberen Totpunkt OT. Dabei repräsentieren die gestrichelten Kurvenverläufe den Stand der Technik und die durchgezogenen Kurvenverläufe ergeben sich bei einer Ausgestaltung des hier vorgestellten Verfahrens. Wie man dem Verlauf der Füllung m entnimmt, wurde bisher beim Festbremsen die Füllung m der Brennräume 22 vergleichsweise stark reduziert (gestrichelte Linie), was einen vergleichsweise langsamen Anstieg des tatsächlich vom Verbrennungsmotor 12 bereitgestellten Drehmomentes T nach dem Lösen der Fahrzeugbremse 20 zum Zeitpunkt t1 zur Folge hatte. Durch die vergleichsweise große Reduzierung der Füllung m wurde beim Stand der Technik der Zündwinkel nicht verändert, was dem gestrichelten Verlauf in der mit d_ZW bezeichneten Kurve entspricht.

Dadurch, dass bei den hier vorgestellten Verfahren beim Festbremsen zwischen den Zeitpunkten t0 und t1 eine vergleichsweise große Spätverstellung der Zündung vorgenommen wird, was sich in der mit d_ZW bezeichneten Kurve durch das ausgeprägte Minimum zwischen t0 und t1 zeigt, kann die Füllung m bereits während der Festbremsphase zwischen den Zeitpunkten t0 und t1 stark erhöht werden. Die dadurch aufgebaute Zündwinkel-Drehmomentreserve kann zum Zeitpunkt t1 durch ein Aufheben der Spätverstellung der Zündung schlagartig mobilisiert werden, so dass das Drehmoment T bei den hier vorgestellten Verfahren wesentlich schneller ansteigt, als beim Stand der Technik. Der schraffierte Bereich in der Fig. 6 veranschaulicht den durch die hier vorgestellten Verfahren erzielten Drehmomentgewinn.

**Patentansprüche**

1. Verfahren zur Begrenzung eines von einem Verbrennungsmotor (12) eines Kraftfahrzeuges bereitgestellten Drehmoments (T) in einem ersten Betriebszustand, der sich durch eine Betätigung einer Bremse (20) des Kraftfahrzeugs bei gleichzeitig über einen Fahrerwunschgeber (52) erfolgenden Anforderung eines Drehmoments (T) des Verbrennungsmotors (12) von einem zweiten Betriebszustand unterscheidet, in dem die Bremse (20) nicht betätigt wird, **dadurch gekennzeichnet, dass** die Begrenzung wenigstens teilweise über eine gesteuerte Verringerung eines Zündwinkelwirkungsgrades im ersten Betriebszustand im Vergleich zum zweiten Betriebszustand erfolgt.

2. Verfahren nach Anspruch 1, **dadurch gekennzeichnet, dass** die Verschlechterung des Zündwinkelwirkungsgrades über eine Verkleinerung eines Winkelabstands (d_ZW) zwischen den Zündungen und einem oberen Totpunkt (OT) einer Kolbenbewegung des Verbrennungsmotors (12) erfolgt.

3. Verfahren nach Anspruch 1 oder 2, **dadurch gekennzeichnet, dass** die Begrenzung ergänzend über eine Begrenzung von Füllungen (m) von Brennräumen (22) des Verbrennungsmotors (12) erfolgt.

4. Verfahren nach Anspruch 3, **dadurch gekennzeichnet, dass** ein aus der Verringerung des Zündwinkelwirkungsgrades resultierender Drehmomentverlust im ersten Betriebszustand allmählich verringert wird, während ein aus der Begrenzung der Füllungen (m) resultierender Drehmomentverlust im ersten Betriebszustand allmählich vergrößert wird.

5. Verfahren nach Anspruch 3, **dadurch gekennzeichnet, dass** ein aus der Begrenzung der Füllungen (m) resultierender Drehmomentverlust im ersten Betriebszustand allmählich verringert wird, während ein aus der Verringerung des Zündwinkelwirkungsgrades resultierender Drehmomentverlust im ersten Betriebszustand allmählich vergrößert wird.

6. Verfahren nach Anspruch 5, **dadurch gekennzeichnet, dass** nach Ablauf einer vorgebbaren Maximalzeitdauer (tmax) auf das Verfahren nach Anspruch 4 umgesteuert wird.

**7.** Verfahren nach wenigstens einem der vorhergehenden Ansprüche, **dadurch gekennzeichnet, dass** die Begrenzung nur dann erfolgt, wenn eine Fahrgeschwindigkeit (v) des Kraftfahrzeugs kleiner als ein Fahrgeschwindigkeitsschwellenwert ist.

**8.** Verfahren nach wenigstens einem der vorhergehenden Ansprüche, **dadurch gekennzeichnet, dass** in dem ersten Betriebszustand zusätzlich eine Begrenzung einer Drehzahl (n) des Verbrennungsmotors (12) auf einen Maximalwert erfolgt.

**9.** Steuergerät (60) eines Verbrennungsmotors (12) eines Kraftfahrzeuges, das ein von dem Verbrennungsmotor (12) bereitgestelltes Drehmoment (T) in einem ersten Betriebszustand begrenzt, der sich durch eine Betätigung einer Bremse (20) des Kraftfahrzeugs (12) bei gleichzeitig über einen Fahrerwunschgeber (52) erfolgenden Anforderung eines Drehmoments (T) des Verbrennungsmotors (12) von einem zweiten Betriebszustand unterscheidet, in dem die Bremse (20) nicht betätigt wird, **dadurch gekennzeichnet, dass** das Steuergerät (60) einen Zündwinkelwirkungsgrad im ersten Betriebszustand im Vergleich zum zweiten Betriebszustand verringert.

**10.** Steuergerät (60) nach Anspruch 9, **dadurch gekennzeichnet, dass** es wenigstens eines der Verfahren nach den Ansprüchen 2 bis 8 ausführt.

**11.** Computerprogramm, **dadurch gekennzeichnet, dass** es zur Anwendung in einem der Verfahren nach den Ansprüchen 1 bis 8 programmiert ist.

**12.** Speichermedium eines Steuergerätes (60) nach Anspruch 9 oder 10, **dadurch gekennzeichnet, dass** auf dem Speichermedium ein Computerprogramm zur Anwendung in einem der Verfahren der Ansprüche 1 bis 8 gespeichert ist.

Fig.1

Fig.2

EP 1 731 755 A2

Fig.3

Fig.4

Fig.5

Fig.6